# EUROPÄISCHE PATENTANMELDUNG

(11) **EP 2 301 798 A2**
(43) Veröffentlichungstag der Anmeldung: **30.03.2011**
(21) Anmeldenummer: 10176120.3
(22) Anmeldetag: 10.09.2010
(51) Int. Cl.: B60N 2/68

(54) **Sitzstruktur, insbesondere Lehnenrahmen und/oder Sitzrahmen für einen Fahrzeugsitz**

(30) Priorität: 11.09.2009 DE 102009040939
(71) Anmelder: Johnson Controls GmbH, 51399 Burscheid (DE)
(72) Erfinder: van Soolingen, Marc, 5932 AW, Tegelen (NL)
(74) Vertreter: Liedtke, Markus

(57) **Zusammenfassung**

Die Erfindung betrifft eine Sitzstruktur (1), insbesondere Lehnenrahmen (2) und/oder Sitzrahmen für einen Fahrzeugsitz, welche jeweils seitlich angeordnete und im Querschnitt im Wesentlichen U-förmig offene Seitenholme (3) aufweisen, die mittels zumindest einem Querholm (4) verbunden sind. Erfindungsgemäß ist
eine einem Fahrzeuginsassen (7) zugewandte Kante (6) verrundet, bogenförmig oder abgeschrägt ausgeformt oder an der dem Fahrzeuginsassen (7) zugewandte Kante (6) zumindest ist ein aufsteckbares, drehbar angeordnetes und/oder flexibles Abstützmittel (11) angeordnet.

## Beschreibung

Die Erfindung betrifft eine Sitzstruktur, insbesondere Lehnenrahmen und/oder Sitzrahmen für einen Fahrzeugsitz nach den Merkmalen des Oberbegriffs des Anspruchs 1.

Im Stand der Technik beschreibt die DE 296 22 299 U1 einen Rückenlehnenrahmen für einen gurtintegrierten Fahrzeugsitz, insbesondere für einen Kraftfahrzeugsitz, im Wesentlichen bestehend aus zwei jeweils zweischalig zusammengesetzten, kastenförmigen Seitenholmen und einem zweischalig zusammengesetzten kastenförmigen Querträger.

Die DE 38 21 554 A1 betrifft einen Fahrzeugsitz mit einem Rückenlehnenrahmen und/oder einem Sitzrahmen, die jeweils seitlich angeordnete, im Querschnitt U-förmig offene Seitenholme aufweisen. Die Seitenholme des Rückenlehnenrahmens sind als Vielflächenkörper ausgebildet, die hohe Kräfte aus allen wesentlichen Kraftangriffsrichtungen aufnehmen können und dabei zugleich einen genügend großen inneren Hohlraum aufweisen, in dem konstruktive Verstellelemente des Sitzes anzuordnen sind, so dass das Bauvolumen des Sitzes insgesamt gering ist.

Die DE 100 47 770 A1 betrifft eine Rahmenstruktur, insbesondere einen Lehnenrahmen für einen Fahrzeugsitz oder -stuhl. Die Seitenholme und gegebenenfalls der diese verbindende obere Querträger des Lehnenrahmens sind aus hohlen Rohlingen durch das IHU-Verfahren (Innenhochdruckumformung) so ausgebildet, dass die zu erwartenden Biegemomente über die Länge dieser Teile annähernd konstant sind, so dass Träger gleicher Festigkeit gebildet sind. Durch mit den IHU-Formwerkzeugen integrierte Stanzwerkzeuge können in einem integrierten Arbeitsgang auch erforderliche Öffnungen zur Aufnahme von Montageelementen ausgebildet werden.

Der Erfindung liegt die Aufgabe zugrunde, den Komfort eines Fahrzeugsitzes mit einfachen Mitteln zu erhöhen und den zum Transport der Sitzstruktur erforderlichen Stauraum zu verringern.

Hinsichtlich der Sitzstruktur und des daraus gebildeten Fahrzeugsitzes wird die Aufgabe erfindungsgemäß durch die im Anspruch 1 angegebenen Merkmale gelöst.

Vorteilhafte Weiterbildungen der Erfindung sind Gegenstand der Unteransprüche.

Bei der Sitzstruktur, insbesondere Lehnenrahmen und/oder Sitzrahmen für einen Fahrzeugsitz, welche jeweils seitlich angeordnete und im Querschnitt im Wesentlichen U-förmig offene Seitenholme aufweisen, die mittels zumindest einem Querholm verbunden sind, ist erfindungemäß eine einem Fahrzeuginsassen zugewandte Kante verrundet, bogenförmig oder abgeschrägt ausgeformt oder an der dem Fahrzeuginsassen zugewandten Kante zumindest ein aufsteckbares, drehbar angeordnetes und/oder flexibles Abstützmittel angeordnet. Dadurch ist auf einfache Weise ermöglicht, den Komfort des Fahrzeugsitzes zu erhöhen. Weiterhin kann im Bereich der erfindungemäß ausgeformten Kante oder im Bereich des Abstützmittels eine Dicke einer Polsterung des Fahrzeugsitzes verringert werden, wodurch eine Materialeinsparung und daraus resultierend eine Verringerung der Herstellungskosten des Fahrzeugsitzes resultiert.

In einer möglichen Ausführungsform ist die Kante mit einem Radius verrundet, wobei der Radius 1/5 bis 1/20 einer Höhe des Seitenholms beträgt. Durch die Verrundung der Kante ist zumindest ein gleichbleibender Komfort eines Fahrzeugsitzes bei einer verringerten Dicke der Polsterung ermöglicht. Vorteilhafterweise ist die Verrundung in einem Arbeitsschritt bei der Ausformung des Seitenholms in selbigen einbringbar.

In einer möglichen Ausführungsform weist die bogenförmige Kante einen Verlauf auf, der mit einer einer Kontur eines Sitzinsassen näherungsweise äquidistant folgenden Kurvenbahn korrespondiert. Die Ausformung der Kante korrespondierend zur Kontur des Sitzinsassen ermöglicht einen besonders hohen Komfort des Fahrzeugsitzes.

In einer alternativen Ausführungsform verläuft die abgeschrägte Kante in einem Winkel α von 30° bis 80° zu einer Basis des Holms. Mittels der abgeschrägten Kante sind vorteilhafterweise lokale Druckpunkte vermieden, in denen die Flächenpressung sehr hohe Werte annimmt. An solchen lokalen Druckpunkten kann die Polsterung herkömmlicher Fahrzeugsitze verhärten und unkomfortabel auf den Fahrzeuginsassen einwirken.

In einer bevorzugten Ausführungsform ist das Abstützmittel dreh- und/oder schwenkbar an einer am Ende eines Schenkels ausgeformten Achse anordenbar. Dadurch kann sich das Abstützmittel vorteilhafterweise mittels einer Dreh- oder Schwenkbewegung um die Achse an variierende Konturen von Sitzinsassen anpassen.

In einer weiteren bevorzugten Ausführungsform ist das Abstützmittel zumindest bereichsweise flexibel und/oder elastisch verformbar ausgeformt, wodurch eine Sitzdruckverteilung gegenüber herkömmlichen Fahrzeugsitzen nach dem Stand der Technik signifikant verbessert ist.

Besonders vorteilhafterweise ist das Abstützmittel mittels eines Spritzgußverfahrens aus Kunststoff gefertigt. Somit ist das Abstützmittel automatisierbar auf schnelle und einfache Art und Weise herstellbar.

In einer besonders bevorzugten Ausführungsform ist das Abstützmittel entsprechend der Kontur des Sitzinsassen vorgeformt, wobei eine Bogenkontur des Abstützmittels spiegelbildlich beidseits der Achse verläuft. Dadurch ist eine sehr genaue und daraus resultierend komfortable Anpassung einer Kontur des Fahrzeugsitzes an die Kontur des Sitzinsassen ermöglicht.

Ausführungsbeispiele der Erfindung werden im Folgenden anhand von Zeichnungen näher erläutert.

Dabei zeigen:
- Fig. 1: schematisch eine perspektivische Ansicht einer Sitzstruktur einer Rückenlehne nach dem Stand der Technik,
- Fig. 2: schematisch einen Schnitt durch die Sitzstruktur nach Fig. 1,
- Fig. 3: schematisch einen Schnitt durch eine erfindungsgemäße Sitzstruktur mit einer verrundeten Kante,
- Fig. 4: schematisch einen Schnitt durch eine erfindungsgemäße Sitzstruktur mit einer bogenförmigen Kante,
- Fig. 5: schematisch einen Schnitt durch eine erfindungsgemäße Sitzstruktur mit einer abgeschrägten Kante,
- Fig. 6: schematisch einen Schnitt durch eine erfindungsgemäße Sitzstruktur mit einem aufgesteckten und schwenkbar angeordneten Abstützmittel,
- Fig. 7: schematisch eine perspektivische Ansicht einer Sitzstruktur in der Ausführungsvariante nach Figur 6 und
- Fig. 8: schematisch eine perspektivische Ansicht einer Sitzstruktur in einer alternativen Ausführungsvariante nach Figur 6.

Einander entsprechende Teile sind in allen Zeichnungen mit den gleichen Bezugszeichen versehen.

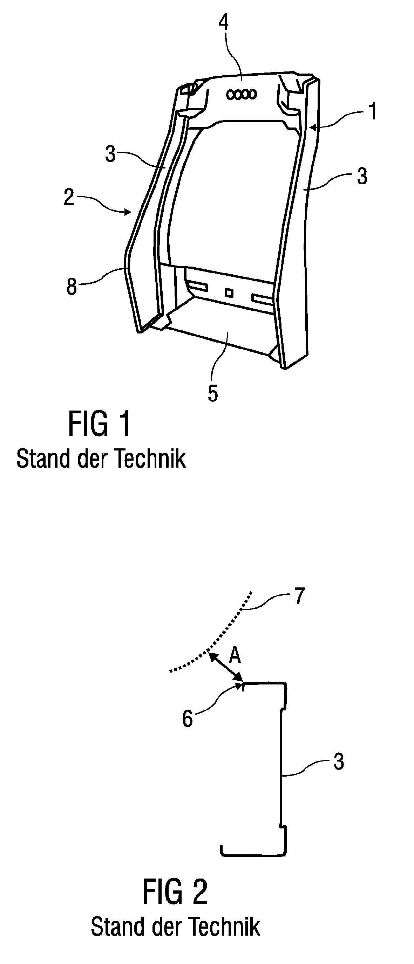

In den Figuren 1 und 2 ist eine Sitzstruktur 1 nach dem Stand der Technik dargestellt. Herkömmliche Fahrzeugsitze weisen häufig eine aus Metallblech gepresste Sitzstruktur 1 aus Lehnenrahmen 2 und/oder Sitzrahmen auf. Wie aus Fig. 1 am Beispiel eines Lehnenrahmens 2 ersichtlich, werden dabei in der Regel zwei Seitenholme 3, ein erster Querholm 4 und ein zweiter Querholm 5 zu einem umlaufenden Rahmen verbunden. Die Verbindung kann beispielweise durch Laserschweißung im Bereich von Überlappungen der Holme 3, 4, 5 erfolgen. Zumindest die Seitenholme 3 von Sitzrahmen und/oder Lehnenrahmen 2 sind häufig U-förmig und zum Rahmeninneren hin offen ausgebildet.

Die Holme 3 bis 5, insbesondere die Seitenholme 3, weisen in ihrem dem Sitzinsassen 7 zugewandten Bereich relativ scharfe Kanten 6 auf, welche durch eine entsprechend dicke Polsterung abgepolstert werden müssen. Daraus resultierend ist die herkömmliche Polsterdicke A sehr dick ausgebildet, um einen unkomfortablen Kontakt zwischen der Kante 6 und dem Sitzinsassen 7 zu vermeiden.

Ferner sind diese Kanten 6 teilweise im Bereich vorspringender Wangen 8 angeordnet, welche beim Versand der gefertigten Sitzstrukturen 1 erheblichen Raum einnehmen, so dass die Sitzstrukturen 1 nicht besonders eng gepackt werden können.

Der Doppelpfeil in den Figuren 2 bis 6 stellt zum Vergleich jeweils die erforderliche herkömmliche Polsterdicke A nach dem Stand der Technik dar.

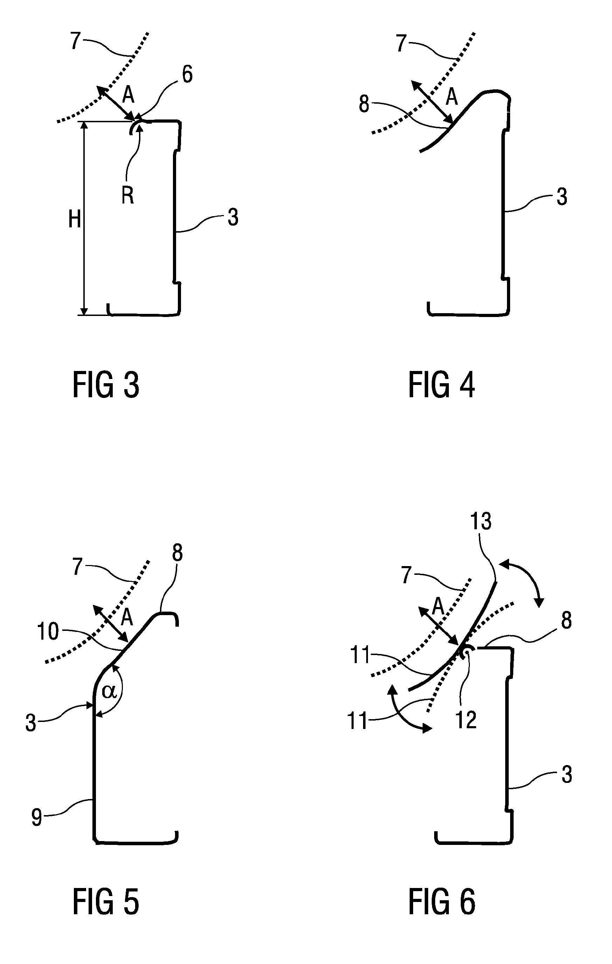

Nach einer ersten Ausbildung der Erfindung, welche in Figur 3 dargestellt ist, ist die dem Sitzinsassen 7 zugewandte Kante 6 der Seitenholme 3 verrundet ausgebildet, wobei der Radius R vorzugsweise 1/5 bis 1/20, insbesondere 1/5 der Höhe H des Seitenholms 3 beträgt.

Bei der Ausbildung nach Figur 4 verläuft der dem Sitzinsassen 7 zugewandte Wangen 8 des Holms 3 bogenförmig mit einer der Kontur des Sitzinsassen 7 näherungsweise äquidistant folgenden Kurvenbahn.

Bei der Ausführung nach Figur 5 ist die Kurvenbahn aus Figur 4 durch eine Gerade 10 ersetzt, die vorzugsweise in einem Winkel α von 30° bis 80°, insbesondere etwa 60°, zur Basis 9 des Seitenholms 3 verläuft.

Die vorgenannten Ausführungsformen der Erfindung nach den Figuren 3 bis 5 sind vorteilhafterweise in einem gemeinsamen Arbeitsschritt während der Ausformung der Seitenholme 3 in diese einbringbar. Dadurch ist die Herstellungszeit der Seitenholme 3 verkürzt und die Produktionskosten sind verringert.

Die herkömmliche Polsterdicke A kann im Bereich der erfindungsgemäß verrundeten, bogenförmigen oder abgekantet ausgebildeten Kante 6 verringert werden. Dies ist in den Figuren 3 bis 5 durch die gestrichelt dargestellte Kontur des Fahrzeuginsassen 7 verdeutlicht.

Ganz besonders bevorzugt ist jedoch die Ausbildung nach Figur 6, bei welcher am Seitenholm 3 ein aufsteckbares, drehbar angeordnetes und/oder flexibles Abstützmittel 11 vorgesehen ist. Im Ausführungsbeispiel ist das Abstützmittel 11 aus Kunststoff durch Spritzgießen gefertigt und am auskragenden Ende der Wangen 8 um eine Achse 12 schwenkbar angeordnet. Das Abstützmittel 11 ist entsprechend der vermuteten Kontur des Sitzinsassen 7 gebogen ausgebildet, wobei die Bogenkontur 13 spiegelbildlich beidseits der Achse 12 verläuft. Das Abstützmittel 11 wird erst am Zielort der nicht verbauten Struktur 1 auf die Achse 12 aufgerastet, wodurch sich der zuvor erforderliche Transportraum für die Sitzstruktur 1 vorteilhafterweise verringert.

Ferner kann sich das Abstützmittel 11 elastisch verformen, dargestellt durch die gestrichelte Bogenkontur 13, und damit die Sitzdruckverteilung nochmals günstiger gestalten. Ferner können durch Auswahl unterschiedlich geformter Abstützmittel 11, d.h. Abstützmittel 11 mit unterschiedlich ausgeformten Bogenkonturen 13, bei gleicher Sitzstruktur 1 verschiedene Sitzkonturen am Fahrzeugsitz erzeugt werden. Eine Polsterung kann im Bereich des Abstützmittels 11 schwächer ausgeführt werden oder sogar ganz entfallen.

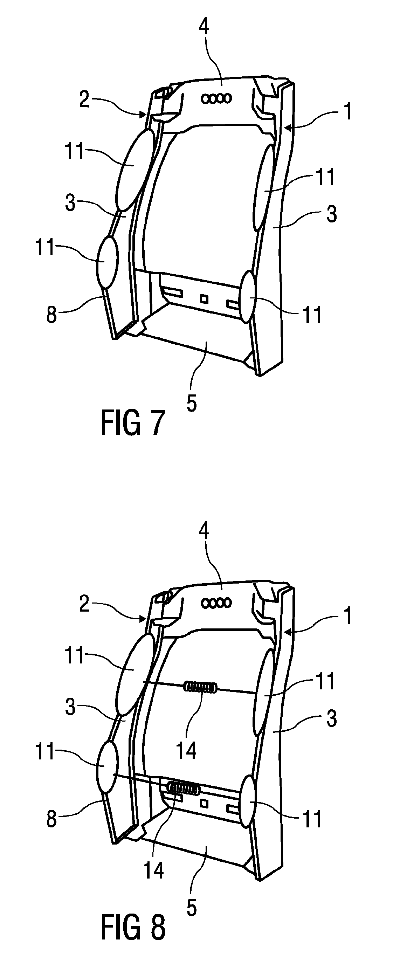

In Figur 7 ist schematisch eine perspektivische Ansicht der Sitzstruktur 1 in der Ausführungsvariante nach Figur 6 dargestellt, wobei die Abstützmittel 11 an der Sitzstruktur 1 erfindungsgemäß angeordnet sind.

In Figur 8 ist schematisch eine perspektivische Ansicht der Sitzstruktur 1 in einer alternativen Ausführungsvariante nach Figur 6 dargestellt, wobei zwischen den an der Sitzstruktur 1 horizontal gegenüberliegend angeordneten Abstützmitteln 11 ein Federelement 14 angeordnet ist. Das Federelement 14 greift in nicht dargestellte Aufnahmebereiche an oder in den Abstützmitteln 11 ein. Das Federelement 14 ist vorzugsweise als Zugfeder ausgebildet und ermöglicht eine elastische Positionierung der Federelemente 14 zueinander und zur Sitzstruktur 1.

### Bezugszeichenliste

- 1: Sitzstruktur
- 2: Lehnenrahmen
- 3: Seitenholm
- 4: erster Querholm
- 5: zweiter Querholm
- 6: Kante
- 7: Sitzinsasse
- 8: Wangen
- 9: Basis
- 10: Gerade
- 11: Abstützmittel
- 12: Achse
- 13: Bogenkontur
- 14: Federelement

- A: herkömmliche Polsterdicke
- H: Höhe
- R: Radius
- α: Winkel

## Patentansprüche

1. Sitzstruktur (1), insbesondere Lehnenrahmen (2) und/oder Sitzrahmen für einen Fahrzeugsitz, welche jeweils seitlich angeordnete und im Querschnitt im wesentlichen U-förmig offene Seitenholme (3) aufweisen, die mittels zumindest einem Querholm (4) verbunden sind,
**dadurch gekennzeichnet, dass**
eine einem Fahrzeuginsassen (7) zugewandte Kante (6) verrundet, bogenförmig oder abgeschrägt ausgeformt ist oder an der dem Fahrzeuginsassen (7) zugewandten Kante (6) zumindest ein aufsteckbares, drehbar angeordnetes und/oder flexibles Abstützmittel (11) angeordnet ist.

2. Sitzstruktur (1) nach Anspruch 1,
**dadurch gekennzeichnet, dass**
die Kante (6) mit einem Radius (R) verrundet ist, wobei der Radius (R) 1/5 bis 1/20 der Höhe (H) des Seitenholms (3) beträgt.

3. Sitzstruktur (1) nach Anspruch 1,
**dadurch gekennzeichnet, dass**
die bogenförmige Kante (6) einen Verlauf aufweist, der mit einer einer Kontur eines Sitzinsassen (7) näherungsweise äquidistant folgenden Kurvenbahn korrespondiert.

4. Sitzstruktur (1) nach Anspruch 1,
**dadurch gekennzeichnet, dass**
die abgeschrägte Kante (6) in einem Winkel (α) von 30°bis 80°zu einer Basis (9) des Seitenholms (3) verläuft.

5. Sitzstruktur (1) nach Anspruch 1,
**dadurch gekennzeichnet, dass**
das Abstützmittel (11) dreh- und/oder schwenkbar an einer am Ende der Wangen (8) ausgeformten Achse (12) anordenbar ist.

6. Sitzstruktur (1) nach Anspruch 1 oder 5,
**dadurch gekennzeichnet, dass**
das Abstützmittel (11) zumindest bereichsweise flexibel und/oder elastisch verformbar ausgeformt ist.

7. Sitzstruktur (1) nach Anspruch 1, 5 oder 6,
**dadurch gekennzeichnet, dass**
das Abstützmittel (11) mittels eines Spritzgußverfahrens aus Kunststoff gefertigt ist.

8. Sitzstruktur (1) nach Anspruch 1, 5, 6 oder 7,
**dadurch gekennzeichnet, dass**
das Abstützmittel (11) entsprechend der Kontur des Sitzinsassen (7) vorgeformt ist, wobei eine Bogenkontur (13) des Abstützmittels (11) spiegelbildlich beidseits der Achse (12) verläuft.
